# EUROPEAN PATENT APPLICATION

(11) **EP 1 975 851 A1**
(43) Date of publication of application: **01.10.2008**
(21) Application number: 08006181.5
(22) Date of filing: 28.03.2008
(51) Int. Cl.: G06K 9/32, H04M 1/725, G06T 11/00

(54) **Portable terminal device, and program for the same**

(30) Priority: 30.03.2007 JP 2007093364
(71) Applicant: Omron Corporation, Kyoto-shi, Kyoto 600-8530 (JP)
(72) Inventor: Tamai, Keiichi, Kyoto 600-8530 (JP); Shibutani, Naoki, Kyoto 600-8530 (JP); Yamano, Keiichiro, Kyoto 600-8530 (JP)
(74) Representative: Käck, Jürgen

(57) **Abstract**

A character image can be readily formed into an image appropriate as a pictographic character for use in an E-mail document. A mobile telephone is equipped with a character image registering system (100) that registers a pictographic character formed from a character image generated by an imaging operation. A character component detecting part (101) detects a character component from the character image to be subjected to image processing. A character image cutting part (102) cuts the image corresponding to a portion including the detected character component. An image processing part (103) adjusts a color of the character component and a color of a background on the basis of different criteria, respectively, with respect to the cut image. Further, the image processing part (103) adjusts a line width of the character component or changes the color of the character component in accordance with a request through an operation unit (3), as appropriate. Upon reception of a request to save the image, a registration processing part (104) accepts an input of a "reading", and registers in a conversion dictionary (203) a correlation between the "reading" and the image subjected to the image processing at this time.

## Description

### BACKGROUND OF THE INVENTION

### 1. Field of the Invention

The present invention relates to a portable terminal device that includes a housing, an imaging unit, a display unit, an operation unit and a control unit which takes a form of a computer functioning as a document preparing part. In particular, the present invention relates to a program that allows a computer to perform a function of generating a character image for use in a document prepared by the computer functioning as a document preparing part, and a portable terminal device that has the program installed thereon.

### 2. Description of the Related Art

Typically, a recent mobile telephone is provided with a digital camera, and has a function of preparing an E-mail message and a function of browsing a Web site. Moreover, such a mobile telephone uses an image called a "pictographic character" (a picture image equal in size to a normal textual character) in an E-mail document.

In general, pictographic characters are registered in a dictionary of a mobile telephone in advance. Alternatively, pictographic characters are obtained by download through a personal computer on the Internet.

In addition, there has been developed a technique of forming into a pictographic character an image taken by a digital camera of a mobile telephone or an image obtained by download. In a conventional mobile telephone, for example, character data for a user-defined character is allocated to optional image data stored in a nonvolatile memory, so that the image data is registered as user-defined character data.

According to this conventional mobile telephone, an image generated by an imaging operation can be changed in size. In order to reduce the image in size such that the image is formed into a pictographic character, however, pixels in the image must be reduced in number or colors in the image must be interpolated. A normal color image has various colors. If the image is simply reduced in size, consequently, there is a possibility that a contour of a subject in the image becomes unclear or color shading occurs at the image. Moreover, if the image has a noise, such a noise exerts an influence on the image after reduction of the image in size.

Consequently, the conventional mobile telephone described above fails to generate an image appropriate as a pictographic character in some cases.

In the conventional mobile telephone, of course, an original image can be formed into an appropriate pictographic character with the use of an image editing function. However, an ordinary user who has no knowledge about such an image editing operation can not produce a pictographic character with ease. Moreover, the image editing operation is very troublesome in the mobile telephone because the mobile telephone is poor in operability. Consequently, a person who has a skill for editing an image can not also produce an appropriate pictographic character with ease.

### SUMMARY OF THE INVENTION

The present invention has been devised in view of the problems described above. An object of the present invention is to facilitate a sequence of processes of forming an image of characters of various fonts, an image of a mark which depicts characters (a logo), an image of hand-written characters or the like (such an image will be referred to as a "character image" in this specification), into an image appropriate as a pictographic character.

The present invention provides a program for a portable terminal device that includes a housing, an imaging unit, a display unit, an operation unit and a control unit which takes a form of a computer functioning as a document preparing part. The program allows the computer to function as a feature detecting part, an image processing part and a registering part.

The feature detecting part detects an area including a character component from an image generated by an imaging operation performed by the imaging unit. - Herein, the "character component" denotes an aggregate of pixels connected to each other so as to represent a feature of a character. At least one character component forms one character.

Such an aggregate can be detected by, for example, extracting an edge from the image to be subjected to the sequence of processes, detecting a portion where a plurality of edge constituent pixels are connected in a line, and narrowing down a portion where the number of constituent pixels exceeds a predetermined value. Herein, detection accuracy can be further improved by narrowing down a portion where a width of the connective falls within a predetermined range.

The image processing part adjusts a color of the character component and a color of a portion other than the character component on the basis of different criteria, respectively, with respect to an image which includes the character component detected by the feature detecting part and falls within an area having an optional size. The registering part registers the image subjected to the image processing performed by the image processing part, as a character image to be used in a document prepared by the document preparing part.

This program allows the portable terminal device to readily take an image of characters, an image of a logo which depicts characters, or the like and form a character image including a subject in the taken image into an image appropriate as a pictographic image for use in a document. With respect to the image subjected to the image processing described above, the portable terminal device adjusts a color of a character component and a color of a background portion on the basis of different criteria, respectively. Therefore, the portable terminal device can represent the character portion clearly without an influence of the background color. Even when an original image has a noise at a background portion or color shading occurs at the background portion of the original image, the portable terminal device eliminates such a disadvantage to form the original image into the character image appropriate for use in an E-mail document.

In one embodiment according to the present invention, the program further allows the computer to function as an image cutting part that accepts a request to designate the optional area of the image generated by the imaging unit, and cuts the image within the area. Herein, the image processing part performs the image processing on the image cut by the image cutting part.

According to this embodiment, a user can freely set a range of an image obtained by an imaging operation and registered as a character image. The portable terminal device can perform the image processing on the image falling within the range set by the user.

Herein, the image cutting part may operate after detection of a character component by the feature detecting part. Alternatively, the feature detecting part may detect a character component from an image cut by the image cutting part.

In one embodiment according to the present invention, the image processing part sets a uniform color as a background color at the portion other than the character component in the image to be subjected to the image processing, and sets a color other than the background color at each pixel that forms the character component.

According to this embodiment, even when an original image has a noise at a background portion or color shading occurs at background portion of the original image, the portable terminal device can eliminate such a disadvantage readily. Further, a color of a character component is different from a color of a background; therefore, the portable terminal device can represent a contour of the character component clearly.

In one embodiment according to the present invention, the image processing part sets a uniform color at all constituent pixels of the detected character component or for each character component of the detected character component. According to this embodiment, the portable terminal device can adjust the color of the character component readily. In the case of reducing the image in size so as to form a pictographic image, the portable terminal device prevents color shading from occurring at the character portion, thereby representing the original image with high fidelity.

In one embodiment according to the present invention, the image processing part performs, on the character component detected by the feature detecting part, a process of partially changing the color of the constituent pixels into the background color or a process of changing the color of the pixels adjacent to the character component into the color of the character component, to change a line width of the character component.

According to this embodiment, the portable terminal device can change a line width of a character which is a subject of imaging so as to be thin or thick, thereby generating an image different from the original image.

In one embodiment according to the present invention, the registering part accepts an input of a "reading" corresponding to the image subjected to the image processing performed by the image processing part, and registers dictionary data that correlates the received "reading" with the image subjected to the image processing.

According to this embodiment, the portable terminal device can use the registered character image in a document as in a case of using a normal textual character.

The present invention also provides a portable terminal device that includes a housing, an imaging unit, a display unit, an operation unit and a control unit. The control unit includes the above-described document preparing part, the above-described feature detecting part, the above-described image processing part and the above-described registering part. These functions are realized in such a manner that the above-described program is installed on a computer in the portable terminal device. If necessary, the above-described various functions may be added to the program.

The portable terminal device also includes a communicating part. Desirably, the portable terminal device is configured as a device (e.g., a mobile telephone, a portable information terminal having a communication function) for preparing an E-mail document to be transmitted through the communicating part.

According to the present invention, a character image of characters or a character image of a mark which depicts characters can be readily formed into an image appropriate as a pictographic character for use in an E-mail document. Accordingly, a character image different from existing pictographic characters can be produced readily. As a result, a variety of character images can be produced.

### BRIEF DESCRIPTION OF THE DRAWINGS

FIG. 1 shows a block diagram of a mobile telephone to which the present invention is applied;
FIG. 2 shows a functional block diagram of a configuration of a character image registering system and a configuration of an E-mail processing system;
FIG. 3 shows an example of an imaging operation;
FIG. 4 shows examples of screens in a case where an image generated by the imaging operation shown in FIG. 3 is subjected to image processing performed by the character image registering system;
FIG. 5 shows a flowchart of the image processing performed by the character image registering system; and
FIG. 6 shows an example of partial change of characters in an image.

### DETAILED DESCRIPTION OF THE PREFERRED EMBODIMENTS

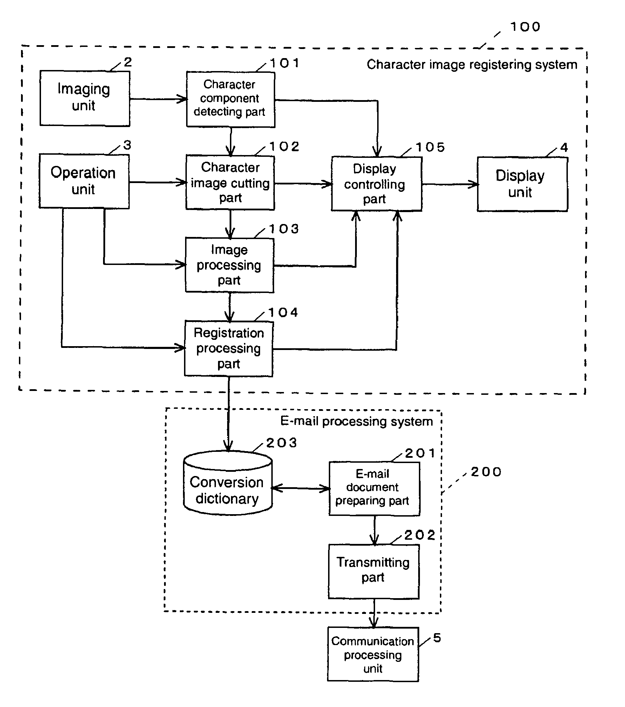

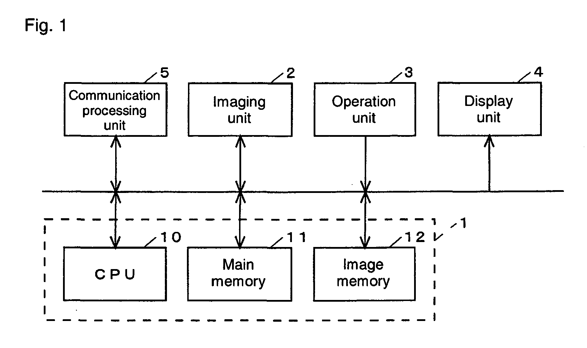

FIG. 1 shows an electrical configuration of a mobile telephone to which the present invention is applied.

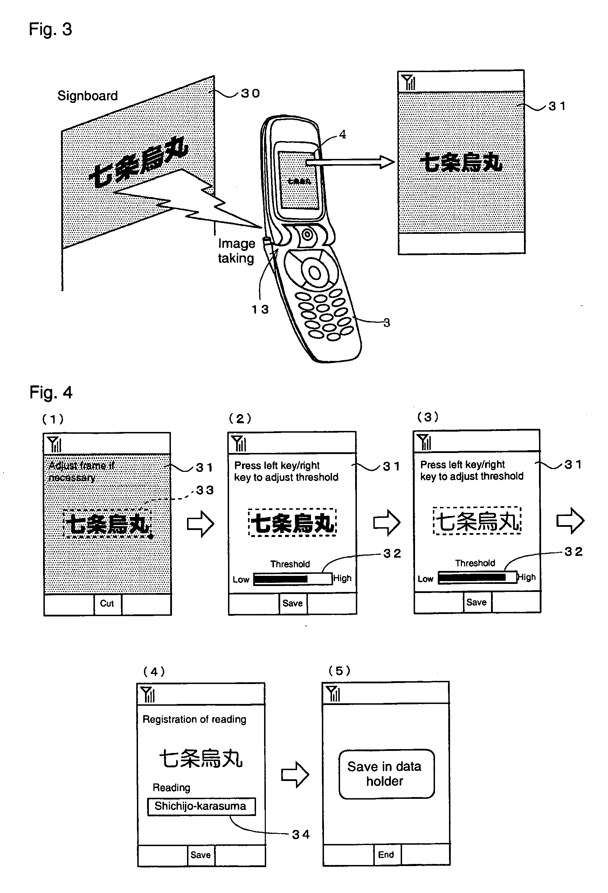

The mobile telephone includes an imaging unit 2, an operation unit 3, a display unit 4, a communication processing unit 5 and the like in addition to a control unit 1 that takes a form of a computer. The imaging unit 2, the operation unit 3 and the display unit 4 are mounted to a molded housing 13 (see FIG. 3). The communication processing unit 5 and the control unit 1 are mounted on a substrate provided in the housing 13. Although not shown in FIG. 1, a circuit such as an interface is interposed between the control unit 1 and the remaining units 2 to 5.

The imaging unit 2 takes a form of a digital camera for color imagery. The operation unit 3 includes numeric keypads and function keypads. The display unit 4 includes a liquid crystal panel, and a drive circuit for the liquid crystal panel. The communication processing unit 5 includes an antenna element, a modulation circuit, a demodulation circuit and the like (each not shown).

The control unit 1 includes a CPU 10, a main memory 11, an image memory 12 and the like.

The main memory 11 takes a form of a nonvolatile memory such as a flash memory, and stores programs and data required for a connection to a radio communication network and other various settings. Further, the main memory 11 stores a list of destinations registered by a user. According to this embodiment, in addition, the main memory 11 stores a program that forms a system for preparation, transmission and reception of E-mail documents (hereinafter, referred to as an "E-mail processing system 200"), and a program that forms a system for production and registration of pictographic characters for use in an E-mail document (hereinafter, referred to as a "character image registering system 100").

Upon reception of a request to select an image taking mode through the operation unit 3, the CPU 10 turns on the imaging unit 2, and outputs drive signals at predetermined time intervals. The imaging unit 2 performs an imaging operation repeatedly in accordance with the drive signals. A color image is generated for each imaging operation, and is subjected to digital conversion performed by an A/D converter (not shown). The resultant digital color image is transferred to a buffer in the CPU 10 and the display unit 4. When the user clicks a shutter at a predetermined timing, a color image generated at this timing is sample-held and, then, is stored in the image memory 12.

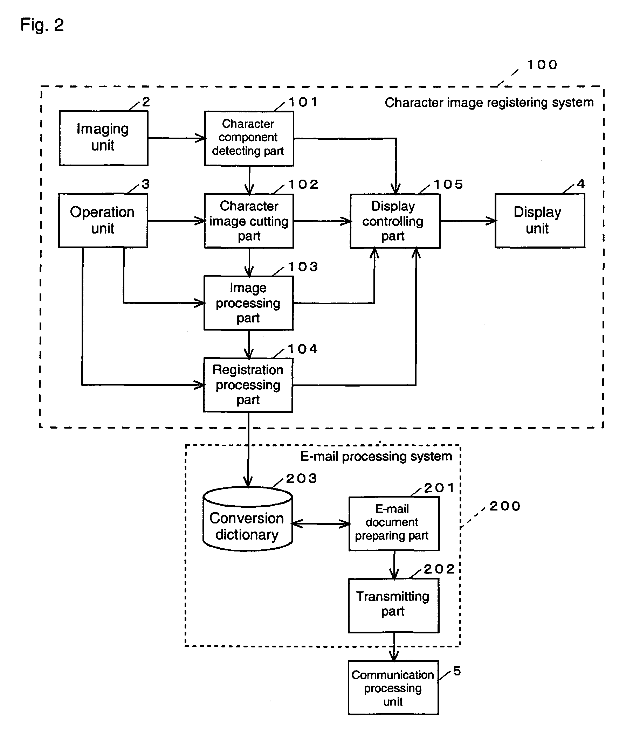

FIG. 2 shows a configuration of the E-mail processing system 200 and a configuration of the character image registering system 100.

The E-mail processing system 200 includes an E-mail document preparing part 201, a transmitting part 202 and a conversion dictionary 203. Although not shown in FIG. 2, the E-mail processing system 200 also includes a display processing part that displays an externally received E-mail document, a storing part that stores a history of incoming and outgoing E-mail messages, and the like.

A sequence of processes to be performed by the E-mail processing system 200 are conventionally well known.

The conversion dictionary 203 stores normal dictionary data for conversion from hiragana to kanji, and data about symbols and standard pictographic characters. The E-mail document preparing part 201 forms a string of characters in accordance with inputs through the keypads of the operation unit 3. Then, the E-mail document preparing part 201 refers to the conversion dictionary 203 to convert the string of characters to a string of predetermined characters. An E-mail document is prepared by repetition of the foregoing processes. When the operation unit 3 accepts a request to transmit the E-mail document, the prepared E-mail document is transferred to the transmitting part 202. Then, the transmitting part 202 sends the E-mail document to the communication processing unit 5.

The character image registering system 100 includes a character component detecting part 101, a character image cutting part 102, an image processing part 103, a registration processing part 104 and a display controlling part 105.

In the character image registering system 100, on an assumption that characters (including hand-written characters) or a mark which depicts characters are/is a subject of imaging, a color image generated by the imaging unit 2 is formed into a character image that reflects a feature of the subject. In addition, the character image is subjected to image processing, and then is registered as a "pictographic character" in the conversion dictionary 203.

Although not shown in FIG. 2, the character image registering system 100 also includes the image memory 102. The image memory 102 has an area for storing a color image generated by the imaging unit 2. Further, the image memory 12 has areas for storing various images generated in the course of processes each performed by the character image registering system 100. These images are held until completion of registration of a character image in a final form.

The character image registering system 100 also includes the imaging unit 2, the operation unit 3 and the display unit 4.

Through the operation unit 3, the user inputs or selects details of the processes performed by the character image cutting part 102, the image processing part 103 and the registration processing part 104. In accordance with a command from the display controlling part 105, the display unit 4 displays images generated in the course of a period in which an original character image is formed into a character image for a pictographic character, and operation guidance.

Next, description will be given of the sequence of processes performed by the character image registering system 100 on the basis of a specific example.

FIG. 3 shows an example that an image of a character string is taken for registration of a character image.

In this example, a signboard 30 that includes a base portion with a predetermined color and a character string (a place name "Shichijo-karasuma" in this example) with a color different from the color of the base portion is a subject of imaging. In FIG. 3, a screen shown at a right side displays a color image generated by imaging the signboard 30.

Specifically, this screen displays a color image 31 that includes the character string, which is the subject of the imaging, and the base portion (partially).

FIG. 4 shows examples of the screens successively displayed on the display unit 4 during a period in which the image generated by the imaging operation is subjected to the sequence of processes performed by the character image registering system 100.

The imaging unit 2 generates the color image 31 to be subjected to the sequence of processes. Then, the character component detecting part 101 detects a character component from the color image 31. The display controlling part 105 receives a result of the detection, and then adds a rectangular frame 33 that indicates a character component detection range to the displayed color image 31 as shown in (1) of FIG. 4.

In this state, the character image cutting part 102 cuts the image in the rectangular frame 33 in accordance with a request from the user. In this example, further, the user can adjust a position or a size of the rectangular frame 33, thereby changing the image cutting range prior to the cutting of the image. Thus, the character image in the detected character component may be registered partially.

Next, the character image cutting part 102 transfers the image to the image processing part 103. With respect to the image, the image processing part 103 changes the color of the portion other than the character component into a preset background color (white in this example). As for the character component, the image processing part 103 determines a color from an average value of color data of constituent pixels (hereinafter, referred to as an "average color"), and changes a color of each constituent pixel on the basis of the average color.

Next, the image processing part 103 transfers the image to the display controlling part 105. With the use of the image, the display controlling part 105 allows the display unit 4 to display the screen shown in (2) of FIG. 4.

Herein, the background color is not limited to white, and may be set at a desired color in advance. Alternatively, the background color may be set at an average color of a background in an actual color image. At the phase of display of the screen shown in (2) of FIG. 4, the background color and the character color may be changed in accordance with a request from the user.

In the image processing described above, the color of the background is different from the color of the character component, that is, the image is represented by two colors. Therefore, a contour of the character component becomes clear, so that the character image can be formed without color shading.

In this example, further, a threshold value can be adjusted.

Herein, the term "threshold value" is used for the sake of convenience to the user. Specifically, a line width is changed by adjustment of a position of a boundary between the character portion and the background portion. In this example, as the threshold value increases, the boundary moves inward the character, so that the line width of the character becomes narrower. The screen at this time displays an indicator 32 that indicates the level of the threshold value.

With the use of this function, the user adjusts the desired size of the line width of the character. In accordance with this adjustment, the image processing part 103 changes a background color display range and a character color display range, thereby changing the position of the boundary. After the change, the displaying controlling part 105 receives the image, so that the screen shown in (2) of FIG. 4 is switched to the screen shown in (3) of FIG. 4.

When the character image is formed desirably, the user issues a request to save the image. In accordance with this request, the registration processing part 104 receives the image subjected to the image processing at this timing.

The registration processing part 104 allows the display controlling part 105 to switch the screen shown in (3) of FIG. 4 to the screen shown in (4) of FIG. 4. The screen shown in (4) of FIG. 4 displays the character image that has been subjected to the image processing, and a box 34 to which a "reading" to be given to the character image is inputted. When the user inputs the "reading" to the box 34, the registration processing part 104 correlates the character image to be registered with the reading to create dictionary data and, then, registers the dictionary data in the conversion dictionary 203. After the registration, the display controlling part 105 allows the display unit 4 to switch the screen shown in (4) of FIG. 4 to the screen shown in (5) of FIG. 4.

Herein, the dictionary data of the character image contains an image file of image data in a final form, and data about a correlation between a file name and a "reading" of the image file. Upon preparation of an E-mail document, the user inputs a "reading", and issues a conversion request. Then, the user retrieves a file name corresponding to the "reading", and then retrieves the image data specified by the file name. Thus, the user can retrieve a registered character image and use the character image in an E-mail document as in a case of a normal textual character.

In a conventional method of registering a color image generated by an imaging operation while reducing the color image in size, a subject of imaging and a background in the image are registered as they are. Consequently, if the image is simply reduced in size, there is a possibility that a contour of the subject becomes unclear or color shading occurs at the image reduced in size. As a result, the image becomes lacking in sharpness. Of course, a user may edit the image manually so as to change a background color to a uniform color or change a line width of a character. However, this editing operation is performed on a pixel basis, which requires large times and efforts. In particular, a device with poor operability, such as a mobile telephone, has difficulty in performing the image correcting operation.

On the other hand, according to this embodiment, the mobile telephone cuts the color image 31 in a desired area and, then, edits the cut image, on the basis of the simple selecting operations, as shown in FIG. 4.

In this embodiment, further, the mobile telephone can adjust the color of the background portion and the color of the character portion independently of each other without interference. Basically, each of the background color and the character color is made uniform. Therefore, even when an original image has a noise or image shading occurs at the original image, the mobile telephone can make the image formed by the image processing sharp without exerting an influence of such a disadvantage on the image.

As a result, the mobile telephone allows the user to readily form an image of various kinds of printed matter, an image of hand-written characters or the like into an image appropriate as a pictographic character, leading to a considerable improvement in convenience.

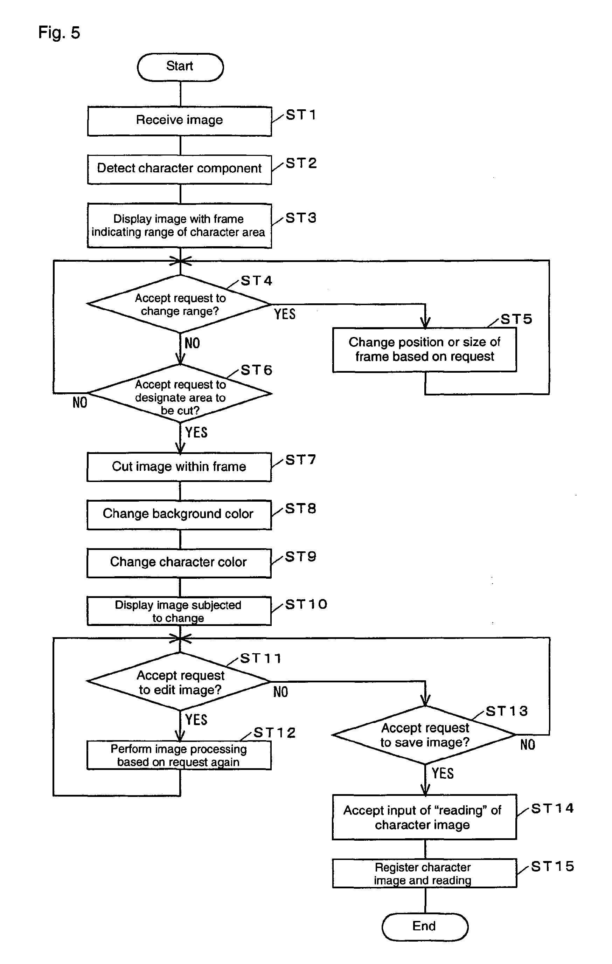

FIG. 5 shows a flow of the processes performed by the character image registering system 100. Hereafter, detailed description will be given of the processes performed by the respective parts shown in FIG. 2, on the basis of this flow. In the following description and FIG. 5, a symbol "ST" is an abbreviation of a term "step".

The character image registering system 100 is activated by a request from the user. In ST 1, first, the image memory 12 stores an image generated by the imaging unit 2.

In ST 2, next, the character component detecting part 101 detects a character component from the image. More specifically, the character component detecting part 101 converts the color image stored in the image memory 12 to a grayscale image, and detects an aggregate of pixels representing characters (i.e., the character component) from the grayscale image. Herein, the character component can be detected with higher accuracy with the use of a conventional technique.

Such a conventional technique is well known; therefore, brief description thereof will be given here.

First, an edge extracting filter called a Log filter is applied to a grayscale image to extract a connective of pixels which is not less than zero or is not more than zero (i.e., a connection component) and to generate a binary image that reflects a result of the extraction. Of the connection components, a connection component that satisfies predetermined criteria with respect to the number of pixels, a size of a circumscribed rectangle, and a difference in density with background pixels, respectively, and comes into no contact with an end edge of the image is specified as a constituent element of a character (i.e., a character component). This process removes a noise to narrow down a connection component having a high possibility of representing a character. Further, a contour of each character component is approximated to a polygonal line, and then is subjected to Hough conversion, in order to specify an area including a character or a string of characters in an image (hereinafter, referred to as a "character area").

In ST 3, next, the display controlling part 105 adds the rectangular frame 33 that indicates the range of the character area specified in ST 2 to the color image 31, and allows the display unit 4 to display the screen including the resultant image (see (2) of FIG. 4).

Herein, when the user issues a request to change the position or the size of the rectangular frame 33 (YES in ST 4), the program proceeds to ST 5. In ST 5, the image processing part 103 changes of the display position or the size of the rectangular frame 33 in accordance with the request. Thereafter, when the user issues a request to cut the image (such a request is issued without changing the rectangular frame 33 in some cases) (YES in ST 6), the program proceeds to ST 7. In ST 7, the character image cutting part 102 cuts the image included in the rectangular frame 33 at this timing.

In order to change the position or the size of the rectangular frame 33, the character component detected in ST 2 must be entirely or partially included in the rectangular frame 33 after the change. In this embodiment, the image processing part 103 can not shift the rectangular frame 33 to a range where no character component is detected.

In ST 8 and ST 9, the cut image is subjected to the image processing. In ST 8, specifically, the image processing part 103 changes, to a preset background color, a color of a portion which is not detected as the character component, that is, a color of a background portion in the image.

In ST 9, next, the image processing part 103 makes a color of a portion, which is detected as the character components, uniform.

Specifically, the image processing part 103 determines an average color of all pixels that form the detected character components or a color with a highest frequency in a histogram by the colors of the pixels, and changes the colors of the pixels that form the character component on the basis of the determined color.

In ST 8 and ST 9, the image is formed into an image in which a boundary between a character portion with one color and a background portion with another color becomes clear. In ST 10, next, the display controlling part 105 prepares the screen including the resultant image (see (2) of FIG. 4), and allows the display unit 4 to display the screen.

Herein, when the user issues a request to change a threshold value or the color (details of such an image editing operation can be selected from a menu) on the screen (YES in ST 11), the program proceeds to ST 12. In ST 12, the image processing part 103 performs the image processing on the image again in accordance with the request.

When the user issues a request to save the image, at a predetermined timing (YES in ST 13), the program proceeds to ST 14. In ST 14, the display controlling part 105 switches the screen (see (4) of FIG. 4), and urges the user to input a "reading" to the box 34.

When the user inputs the "reading" to the box 34, the program proceeds to ST 15. In ST 15, the registration processing part 104 correlates the "reading" with the character image subjected to the processes from ST 3 to ST 10, and registers the correlation in the conversion dictionary 203.

In ST 9, the character color may be set for each character component. Accordingly, in a case where a plurality of characters are represented by different colors, the user selects a method of setting a character color for each character component to generate an image that reflects the original colors of the respective characters.

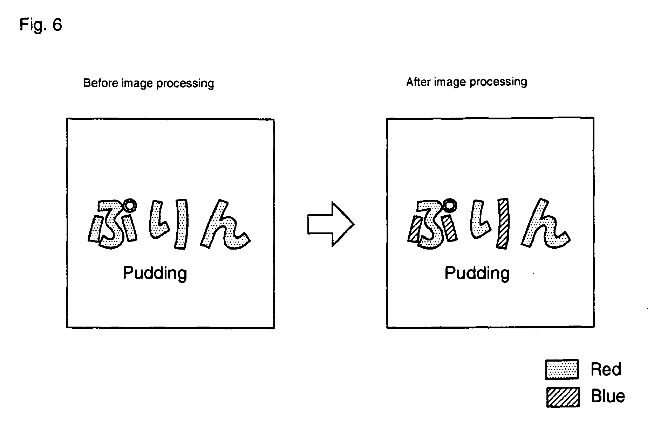

In a case where the image is edited in accordance with the request from the user in ST 11 and ST 12, the character image registering system 100 may accept a selection by the user on a character component basis or a selection by the user within an optional range, to perform the image editing operation within the selected range. As shown in FIG. 6, this configuration allows partial change of a line width or a color of a character.

In FIG. 4, as an example, the line width of the character in the character image is changed. However, the present invention is not particularly limited to this example. Alternatively, the contour of the character component may be changed to a predetermined color different from the color of the character component.

If a memory capacity has an allowance, a moving image may be formed. For example, of the pixels that form the character component, the pixels each having a brightness exceeding a predetermined threshold value are represented by the character color while the pixels each having a brightness falling short of the predetermined threshold value are represented by the background color. Then, the threshold value is updated, and the display of the character image is changed in accordance with the update. This configuration allows provision of artistic display in such a manner that a character emerges from a background or a character gradually disappears.

In the foregoing embodiment, further, the character component is detected from the color image to be subjected to the sequence of processes, and the cutting range of the image is set initially on the basis of the result of the detection. Alternatively, the character component may be detected through the following procedure. That is, an image generated by an imaging operation is displayed on the display unit, and the user issues a request to designate a cutting range of the image. Then, a character component is detected from the image cut within the designated range.

## Claims

1. A program for a portable terminal device that includes a housing (13), an imaging unit (2), a display unit (4), an operation unit (3) and a control unit (1) which takes a form of a computer functioning as a document preparing part (201),
the program allowing the computer to function as:
a feature detecting part (101) that detects a character component from an image generated by an imaging operation performed by the imaging unit (2);
an image processing part (103) that adjusts a color of the character component and a color of a portion other than the character component on the basis of different criteria, respectively, with respect to an image which includes the character component detected by the feature detecting part (101) and falls within an area having an optional size; and
a registering part (104) that registers the image subjected to the image processing performed by the image processing part (103), as a character image to be used in a document prepared by the document preparing part (201).

2. The program according to claim 1, further allowing the computer to function as:
an image cutting part (102) that accepts a request to designate the optional area of the image generated by the imaging unit (2), and cuts the image within the area, wherein
the image processing part (103) performs the image processing on the image cut by the image cutting part (102).

3. The program according to claim 1 or 2, wherein
the image processing part (103) sets a uniform color as a background color at the portion other than the character component in the image to be subjected to the image processing, and sets a color other than the background color at each pixel that forms the character component.

4. The program according to claim 3, wherein
the image processing part (103) sets a uniform color at all constituent pixels of the detected character component or for each character component.

5. The program according to claim 3 or 4, wherein
the image processing part (103) performs, on the character component detected by the feature detecting part (101), a process of partially changing the color of the constituent pixels into the background color or a process of changing the color of the pixels adjacent to the character component into the color of the character component, to change a line width of the character component.

6. The program according to claim 1, wherein
the registering part (104) accepts an input of a "reading" corresponding to the image subjected to the image processing performed by the image processing part (103), and registers dictionary data that correlates the received "reading" with the image subjected to the image processing.

7. A portable terminal device comprising:
a housing (13);
an imaging unit (2);
a display unit (4);
an operation unit (3); and
a control unit (1),
the control unit (1) including:
a document preparing part (201);
a feature detecting part (101) that detects a character component from an image generated by an imaging operation performed by the imaging unit (2);
an image processing part (103) that adjusts a color of the character component and a color of a portion other than the character component on the basis of different criteria, respectively, with respect to an image which includes the character component detected by the feature detecting part (101) and falls within an area having an optional size; and
a registering part (104) that registers the image subjected to the image processing performed by the image processing part (103), as a character image to be used in a document prepared by the document preparing part (201).
